# EUROPÄISCHE PATENTSCHRIFT

(11) **EP 0 538 286 B1**
(45) Veröffentlichungstag und Bekanntmachung des Hinweises auf die Patenterteilung: **30.11.1994**
(21) Anmeldenummer: 91911745.7
(22) Anmeldetag: 08.07.1991
(51) Int. Cl.: B29B 17/00, B29C 45/63

(54) **KOMBINIERTES KOMPOUNDIER-SPRITZGUSSVERFAHREN UND VORRICHTUNG ZUR DURCHFÜHRUNG DIESES VERFAHRENS**
COMPOUNDING-INJECTION MOULDING COMBINED PROCESS AND DEVICE
PROCEDE ET DISPOSITIF DE MALAXAGE ET MOULAGE PAR INJECTION COMBINES

(30) Priorität: 09.07.1990 DE 4021922
(43) Veröffentlichungstag der Anmeldung: 28.04.1993
(73) Patentinhaber: INTRAFICO INTERCONTINENTAL TRADE & FINANCE CO. ESTABL., FL-9490 Vaduz (LI)
(72) Erfinder: PUTSCH, Peter, D-8500 Nürnberg 90 (DE)
(74) Vertreter: Voigt, Günter, Dipl.-Ing.
(86) Internationale Anmeldenummer: DE9100564
(87) Internationale Veröffentlichungsnummer: WO9200838

(56) Entgegenhaltungen:
- EP-A- 357 880
- WO-A-85/03027
- FR-A- 2 205 406
- US-A- 2 382 655
- US-A- 4 591 467

## Beschreibung

Die Erfindung bezieht sich auf ein kombiniertes Kompoundier-Spritzgußverfahren gemäß Oberbegriff des Anspruchs 1 und auf eine Vorrichtung gemäß Anspruch 4 zur Durchführung dieses Verfahrens.

Ein solches Verfahren bzw. eine solche Vorrichtung sind grundsätzlich bereits aus der EP-OS 0 321 742 bekannt. Bei der bekannten Vorrichtung ist ein stehend angeordneter Aufnahmebehälter vorgesehen, in dessen Bodenbereich ein um die Behälterachse drehbares Zerkleinerungs- und Mischwerkzeug und eine Mantelöffnung zum Auslaß des in der Vorrichtung erzeugten Granulats angeordnet sind. Von dort wird das Kunststoffgut einem zweistufigen Schneckenförderer zugeführt und ggfs. temperaturgeführt.

Eine solche Vorrichtung gewährleistet weder eine ausreichende Vermischung, um die Verwendung von recycletem Material auch für die Herstellung hochwertiger Kunststoffprodukte zu ermöglichen noch gestattet sie wegen der fehlenden Zwischenspeichermöglichkeit die Verwendung eines Kolbeneinspritzaggregats mit diskontinuierlichen Arbeitsablauf.

Aus der US-A-2 382 655 sind ein Verfahren und eine Vorrichtung zum Recyclen von Kunststoff-Abfällen bekannt. Das Material wird dabei in einer mit Messern versehenen Vorrichtung zerkleinert uns anschließend über einen Schneckenförderer einer Weiterverarbeitungsvorrichtung zugeführt.

Aus der US-A-4 591 467 ist bereits ein zweistufiges Mischen, Erwärmen und Homogenisieren von Kunststoffmaterial bekannt.

Aus der DE-PS 960 854 ist eine Spritzgußmaschine mit einem beheiztem Spritzzylinder bekannt, in dem eine ständig umlaufende Schnecke angeordnet ist, die das vorplastifizierte Material in den Druckraum einer Strangpresse fördert. Für recycletes Material ist diese Spritzgußmaschine schon wegen der nicht gewährleisteten hinreichenden Vermischung der Komponenten so nicht verwendbar.

Auch aus der DE-GM 1 847 590 ist eine Spritzgußmaschine für thermoplastische Kunststoffe mit Schneckenplastifizierung bekannt, die aber ebenfalls wegen unzureichender Vermischung der recycleten Komponenten so nicht für ein Recycle-Verfahren Anwendung finden kann.

Kunststoffe haben auf allen Gebieten des täglichen Lebens - aber auch im industriellen Bereich - zunehmende Bedeutung erlangt.

Inzwischen bereitet die Entsorgung der aus Kunststoff gefertigten Teile zunehmend Probleme, da diese nicht wie Naturprodukte oder aus Naturprodukten abgeleitete Teile durch Verrotten in den Kreislauf der Natur zurückgelangen.

Die Bedeutung der Kunststoffe soll am Beispiel Automobil erläutert werden. In einer rasanten Entwicklung eroberten die Polymere inzwischen einen Gewichtsanteil von 10 %. Überlegungen, wie dieser moderne Werkstoff erneut zu nutzen wäre, hielten mit dem zuvor geschilderten rasanten Tempo nicht Schritt. Während Stahl, Eisen und Aluminium, die um die 75 % der Fahrzeugmassse ausmachen, zum größten Teil wiederverwertet werden, belasten die Kunststoffe die Deponien. Darüber hinaus besteht die Gefahr, daß Kunststoffteile wegen der oben geschilderten Zusammenhänge in der Öffentlichkeit mit einem Negativ-Bild belastet werden und damit an Akzeptanz in der Bevölkerung verlieren.

So besteht letztendlich die Gefahr, daß diese modernen Werkstoffe aus politischen Erwägungen heraus möglicherweise ersetzt werden müssen, obwohl die Ingenieure nur ungern bereit sind, auf eben diese Werkstoffe zu verzichten, die darüber hinaus bei vielen Bauteilen auch kaum substituiert werden können.

Recycling der Kunststoffe ist daher das Gebot der Stunde. Der Weg zum Recycling der Kunststoffe führt über eine Demontage und eine Vorsortierung. Durch eine solche Separierung können weitgehend sortenreine Kunststoffe erhalten werden. So plant beispielsweise ein großes Automobilwerk ein Demontagewerk in Wackersdorf. Dies geschieht in der Erkenntnis, daß ohne eine Wiederverwendung der Kunststoffe stärker auf die Möglichkeit einer Kunststoff-Abfall-Verbrennung zurückgegriffen werden müßte, was aber aus umweltpolitischen Gründen ebenfalls unerwünscht wäre.

Im Rahmen eines Kunststoff-Recyclings soll in Berlin die größte Gewerbemüll-Sortieranlage Europas mit ca. 100.000 Tonnen Müll Umschlag pro Jahr entstehen, in der eine Separierung der Müllbestandteile Glas, Metall und Kunststoff u.a. erfolgt. Die so vorsortierten Rohstoffe werden dann als "Sekundär-Rohstoffe" wieder nutzbar gemacht.

Insbesondere in der Verpackungsindustrie fallen große Mengen Kunststoff-Müll an, der hauptsächlich aus thermisch nur einmal belasteten Kunststoffen hoher Qualität besteht, da die Hochleistungs-Verarbeitungsmaschinen in der Verpackungsindustrie nur mit besten Materialien arbeiten können.

Der Wunsch nach einer Wiederaufarbeitung der Kunststoffe ist an sich bereits seit langem vorhanden. Alle in Angriff genommenen Projekte scheiterten bisher jedoch an den sehr hohen Kosten der Aufbereitung. Das auf den bisher üblichen Wegen aufbereitete Recycling-Material ist nahezu gleich teuer wie Neuware. Dies ist verständlicherweise eine schlechte Ausgangssituation für das an sich unbedingt notwendige Recycling.

Üblicherweise wird das wiederzuverarbeitende Material gesammelt, sortiert, gemahlen, in einer Zwischenstufe extrudiert und granuliert sowie anschließend beim Verarbeiter wieder eingeschmolzen und erneut in die gewünschten Formen gebracht. Allein der erneute Schmelzvorgang verursacht dabei wegen des hohen Energieverbrauchs erhebliche Kosten.

Voraussetzung für eine Wiederverwendung der Kunststoffe ist zunächst einmal eine ausreichende Vorsortierung. Die zu wählende Intensität der Vorsortierung richtet sich nach dem späteren Verwendungszweck des wiederaufzubereitenden Materials. Darüber hinaus ist eine ausreichende Mischung des vorsortierten Materials erforderlich, da das Material trotz der Vorsortierung nicht als homogen anzusehen ist; das Material ist vielfach nicht einmal sortenrein. In der Rohware, die hauptsächlich aus PE besteht, sind größere Anteile von PP (z.B. Verschlüsse) PS, PET u.ä. enthalten.

Erst eine gute Homogenisierung der Rohware schafft die Voraussetzungen für eine spätere Wiederverwertung der Kunststoffe. Es sollen ja auch hochwertige Fertigteile aus dem "Sekundärrohstoff" hergestellt werden können, die eventuell Beimischungen von Talkum, Glasfasern, allgemeinen Verstärkungsstoffen, Stabilisatoren und Farben erforderlich machen.

Der Erfindung liegt die Aufgabe zugrunde ein Verfahren und eine Vorrichtung zur Durchführung des Verfahrens zu schaffen, das bzw. die es erlaubt, auch aus recycletem Kunststoffmaterial ein vollwertiges neues Kunststoffmaterial herzustellen.

Die Lösung dieser Aufgabe erfolgt mit Hilfe der Merkmale der Ansprüche 1 bzw. 4.

Vorteilhafte Weiterbildungen ergeben sich aus den Ansprüchen 2 und 3 bzw 5 bis 8.

Die Erfindung wird nachfolgend unter Bezugnahme auf die schematisierte Darstellung in der Zeichnungsfigur erläutert.

Die Rohware wird zunächst in einer Kompoundieranlage 10 erforderlichenfalls ausreichend geknetet und erschmolzen. Der Mischvorgang muß von einer solchen Intensität sein, daß eine ausreichende Homogenität der so bearbeiteten Rohware gewährleistet ist. Hierfür wird vorzugsweise ein Kneter eingesetzt. Darunter ist eine der Homogenisation dienenende Einrichtung (ein Homogenisator) zu verstehen, der verschiedene Stoffe bzw. Kunststoffe untereinander und/oder mit Zusätzen mischt. Dies geschieht hauptsächlich durch mechanische Bewegung (gleichlaufend, gegenlaufend, axial), beispielsweise durch Rotoren oder Schnecken, bis zur hinreichenden Vermischung und Plastifizierung. Ggfs. kann auch eine zusätzliche Heizung vorgesehen werden.

Erst wenn eine hinreichende Vermischung und Plastifizierung sichergestellt ist, kann die Schmelze der Rohware in einen Umlenker 11 und einen Pufferspeicher bzw. Stauraum 12 weitergeleitet werden, der auch eine Temperatursteuerung aufweisen sollte, beispielsweise durch oben, unten und/oder seitlich angeordnete beheizte Kanäle.

Aus dem Umlenker 11 und dem temperaturgeführten Pufferspeicher bzw. Stauraum 12 gelangt die geschmolzene Rohware dann in eine an sich bekannte Einspritzeinheit 13. Diese kann ein herkömmliches Schneckenschubaggregat mit beliebigem L/D-Verhältnis, aber auch eine Kolbenspritzeinheit sein.

Es kann auch eine Hohlkörperblasanlage zur Anwendung kommen. Hierzu sind zu rechnen: kontinuierliche Extrusionsblasanlagen, Blasanlagen mit Schmelzestauköpfen (der Extruder arbeitet auch kontinuierlich in einem Speicher), Blasanlagen mit Schubschneckenaggregaten (ähnlich Spritzgußmaschine - diskontinuierlich) und Spritzblasanlagen (Vorformling wird gespritzt und anschließend aufgeblasen - diskontinuierlich).

Die Einzugszone des Spritzaggregats (Spritzguß) oder Extruders (Blasanlagen) und die Schnecke müssen so ausgelegt sein, daß heißes plastifiziertes Material eingezogen werden kann. Es müssen daher eine ausreichend große Öffnung bzw. tiefe Schneckengänge vorhanden sein. Ggfs. kann auch ein Stopfer (Kolben/Pusher) vorgesehen werden.

Die Größen der einzelnen Komponenten Kompoundierheit 10, Umlenker 11, Stauraum 12 und Einspritzeinheit 13 werden so auf einander abgestimmt, daß ein quasi-kontinuierlicher Fluß durch diese aus den Komponenten bestehende Gesamteinheit gewährleitet werden kann. Geringfügige kurzfristige Unterschiede im Materialfluß von Komponente zu Komponente werden durch den Stauraum 12 (Pufferspeicher) ausgeglichen. Der Stauraum 12 bzw. Pufferspeicher ist aber auch erforderlich, um den reibungslosen Übergang von der weitgehend kontinuierlich arbeitenden Kompoundier-Einrichtung zur intermittierend arbeitenden Einspritzeinheit 13 herzustellen. Langfristig erfolgt die Angleichung und Überwachung der Materialflüsse der einzelnen Komponenten über eine entsprechende Zentralsteuerung. Auch die Temperaturführung kann über eine solche Steuerung beeinflußt und überwacht werden.

Das oben beschriebene Verfahren eignet sich nicht nur zur Wiederaufbereitung von Abfällen, sondern kann auch zum gleichzeitigen Kompoundieren und Spritzen von Neuware-Mischungen verwendet werden, beispielsweise zum Kompoundieren von PP/Talkum, PP/Glasfaser, PA/Glasfaser, ABS/Farbe u.s.w.

Es können Kunststoffe und Kunststoffgemische untereinander gemischt werden (blends), aber auch Kunststoffe oder Kunststoffgemische mit Zusatz- oder Füllstoffen versehen (compounds) und zu Fertigteilen verarbeitet werden.

Ein ganz erheblicher Vorteil bei der Wiederaufbereitung ist die Tatsache, daß ein zweiter Schmelzvorgang - wie nach der bisher üblichen Vorbehandlung der aufzubereitenden Rohware und deren Granulierung - vermieden wird. Dies spart einerseits Energiekosten in einer nennenswerten Größenordnung und schont andererseits auch das Material.

Bei zähfließenden Materialien kann ein Druckaufbau im Stauraum 12 des Pufferspeichers erforderlich sein. Dies kann über einen Kolben o.ä. erreicht werden.

Die Kompoundiereinheit 10 wird vorzugsweise als Kneter ausgebildet; sie kann aber auch als Doppelschnecke ausgebildet sein. Sofern eine ausreichende Mischung im konkreten Fall für das jeweilige Material gewährleistet ist, kann ausnahmsweise auch eine Einzelschnecke in der Kompoundiereinheit vorgesehen werden. Die Kompoundiereinheit kann auch mit einer Entgasungseinrichtung versehen werden.

Als Stauraum 12 (Pufferspeicher) kommt in erster Linie ein temperierter Schacht in Frage. Auch hier kann eine Entgasungseinrichtung vorgesehen werden. Der Stauraum 12 kann für den freien Fall der gekneteten Masse ausgebildet oder mit einer Zwangsförderung, insbesondere mit einem Kolben, ausgestattet sein; bei Bedarf kann der Stauraum 12 auch für hohe Drücke ausgelegt sein.

Die sich an den Stauraum 12 anschließende Einspritzeinheit 13 entspricht dann weitgehend dem diesbezüglichen Stand der Technik. Es können Schneckeneinspritzaggregate oder Kolbeneinspritzaggregate zur Anwendung kommen.

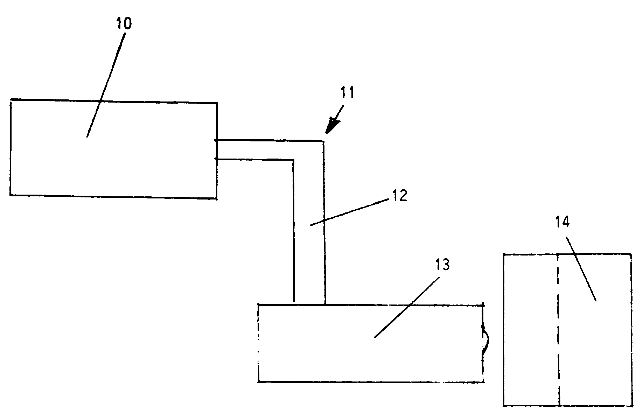

## Patentansprüche

1. Verfahren für das Recycling von Kunststoffen, bei dem die vorsortierten Kunststoff-Abfälle in einer ersten Stufe zerkleinert, gemischt, erschmolzen und homogenisiert werden und abschließend einer Einspritz- und Formgebungseinrichtung zugeführt werden, dadurch gekennzeichnet, daß der Vorgang des Zerkleinerns, Mischens, Erschmelzens und Homogenisierens in einem Kneter erfolgt und die so gewonnene Rohware vom Kneter unmittelbar in einen temperaturgeführten Stauraum (12) weitergeleitet und von dort der Einspritz- (13) und Formgebungseinrichtung zugeführt wird.

2. Verfahren nach Anspruch 1, dadurch gekennzeichnet, daß die Rohware bei der Zwischenspeicherung unter erheblichem Überdruck steht.

3. Verfahren nach einem der Ansprüche 1 bis 2, dadurch gekennzeichnet, daß die Rohware bei der Zwischenspeicherung entgast wird.

4. Vorrichtung zur Durchführung des Verfahrens nach einem der Ansprüche 1 bis 3 für das Recycling vorsortierter Kunststoff-Abfälle, die zerkleinert, gemischt, erschmolzen und homogenisiert werden, dadurch gekennzeichnet, daß für das Zerkleinern, Mischen, Erschmelzen und Homogenisieren ein Kneter, für die Zwischenspeicherung ein temperaturgeführter Stauraum (12) bzw. Pufferspeicher und für das Ausformen des Werkstoffs eine Einspritz- (13) und Formgebungseinrichtung vorgesehen sind.

5. Vorrichtung nach Anspruch 4, dadurch gekennzeichnet, eine Kompoundier-Einrichtung (10) mit einer Entgasungs-Einrichtung versehen ist.

6. Vorrichtung nach einem der Ansprüche 4 oder 5, dadurch gekennzeichnet, daß ein Stauraum (12) als temperierter Schacht für den freien Fall der im Kneter bearbeiteten Masse ausgebildet ist.

7. Vorrichtung nach einem der Ansprüche 4 bis 6, dadurch gekennzeichnet, daß der Stauraum (10) und/oder ein Umlenker (11) mit einer Entgasungseinrichtung versehen sind.

8. Vorrichtung nach einem der Ansprüche 4 bis 7, dadurch gekennzeichnet, daß der Stauraum (12) mit einem Kolben für die Zwangsförderung ausgestattet ist.

## Claims

1. Method for the recycling of plastics materials, in which the presorted plastics material wastes are in a first stage comminuted, mixed, melted and homogenised and finally fed to an injection and moulding equipment, characterised thereby that the process of comminuting, mixing, melting and homogenising is carried out in a kneader and the thus obtained raw product is passed on directly from the kneader to a temperature-controlled reservoir chamber (12) and from there fed to the injection (13) and moulding equipment.

2. Method according to claim 1, characterised thereby that the raw product stands under substantial excess pressure during the intermediate storage.

3. Method according to one of claims 1 to 2, characterised thereby that the raw product is degassified during the intermediate storage.

4. Device for the carrying out of the method according to one of claims 1 to 3 for the recycling of presorted plastics material wastes, which are comminuted, mixed, melted and homogenised, characterised thereby that a kneader is provided for the comminuting, mixing, melting and homogenising, a temperature-controlled reservoir chamber (12) or buffer store is provided for the intermediate storage and an injection (13) and moulding equipment is provided for the shaping of the material.

5. Device according to claim 4, characterised thereby that a compounding equipment (10) with a degassification equipment is provided.

6. Device according to one of claims 4 or 5, characterised thereby that a reservoir chamber (12) is constructed as a cooled shaft for the free fall of the masses processed in the kneader.

7. Device according to one of the claims 4 to 6, characterised thereby that the reservoir chamber (12) and/or a deflecting device (11) are provided with a degassification equipment.

8. Device according to one of the claims 4 to 7, characterised thereby that the reservoir chamber (12) is equipped with a piston for forced conveying.

## Revendications

1. Procédé pour le recyclage de matières synthétiques, selon lequel des déchets en matière synthétique pré-triés sont d'abord concassés, mélangés, fondus et homogénéisés, puis acheminés vers une installation d'injection et de formage, *caractérisé en ce que*
- le processus de concassage, de mélange, de fonte et d'homogénéisation s'effectue dans un malaxeur,
- la matière première ainsi obtenue est acheminée directement vers un compartiment de retenue (12) à température réglée d'où elle est acheminée vers l'installation d'injection et de formage (13).

2. Procédé selon la revendication 1 *caractérisé en ce que* la matière première subit une surpression considérable lors du stockage intermédiaire.

3. Procédé selon l'une des revendications 1 à 2 *caractérisé en ce que* la matière première est dégazée lors du stockage intermédiaire.

4. Dispositif pour mettre en oeuvre le procédé conforme à l'une des revendications 1 à 3 pour le recyclage de déchets en matière synthétique pré-triés, qui sont concassés, mélangés, fondus et homogénéisés, *caractérisé par*
- un malaxeur pour assurer le concassage, le mélange, la fonte et l'homogénéisation,
- un compartiment de retenue (12), respectivement un réservoir d'accumulation à température réglée pour assurer le stockage intermédiaire,
- une installation d'injection et de formage (13) pour mouler la matière première.

5. Dispositif selon la revendication 4 *caractérisé par* un dispositif de malaxage (10) pourvu d'un dispositif de dégazage.

6. Dispositif selon l'une des revendications 4 ou 5 *caractérisé en ce que* le compartiment de retenue (12) est constitué d'un puits à température équilibrée pour permettre la chute libre de la masse travaillée dans le malaxeur.

7. Dispositif selon l'une des revendications 4 à 6 *caractérisé en ce que* le compartiment de retenue (12) et/ou un élément de déviation sont pourvus d'un dispositif de dégazage.

8. Dispositif selon l'une des revendications 4 à 7 *caractérisé en ce que* le compartiment de retenue (12) est pourvu d'un piston pour permettre l'acheminement forcé.
